# EUROPEAN PATENT APPLICATION

(11) **EP 0 624 977 A2**
(43) Date of publication of application: **17.11.1994**
(21) Application number: 94106813.2
(22) Date of filing: 02.05.1994
(51) Int. Cl.: H04N 5/92, H04N 5/94

(54) **Digital data processing apparatus**

(30) Priority: 11.05.1993 JP 109244/93
(71) Applicant: MATSUSHITA ELECTRIC INDUSTRIAL CO., LTD., Kadoma-shi, Osaka-fu 571 (JP)
(72) Inventor: Ootaka, Hideki, Neyagawa-shi, Osaka-ku, 572 (JP); Juri, Tatsuro, Miyakojima-ku, Osaka-shi, Osaka-fu 534 (JP)
(74) Representative: Kügele, Bernhard

(57) **Abstract**

In a digital signal recording and reproducing apparatus for recording on a track of a recording medium a recording block composed of digital video data and a recording block of AUX data composed of auxiliary information data, if there is an uncorrectable error in data reproduced from the recording medium, the presence of error in the video data in the recording block is identified by setting a specific bit sequence as STATUS information at the beginning of the recording block. In the AUX data divided into PACKs, a bit sequence including a bit sequence of STATUS information is inserted in the header at the beginning of each PACK to identify the presence of error in the corresponding PACK.

## Description

### BACKGROUND OF THE INVENTION

### 1. Field of the Invention

The present invention relates to a digital signal processing method in the event of an error in reproduction, in a digital signal recording and reproducing apparatus for recording digitized video signal data together with their auxiliary information data.

### 2. Description of the Prior Art

As the consumer video appliances are enhanced in picture quality and digitized recently, recording and reproducing apparatus using digital recording, instead of the conventional analog recording, has been put in practical use. As a typical example of such digital signal recording and reproducing apparatus, a digital recording video tape recorder (VTR) (digital VTR) is known. In the professional field, digital VTRs of D1, D2, D3 standard have been commercialized. For consumer use, for example, a prototype of digital VTR of bit rate reduction processing of video data was introduced by C. YAMAMITSU et al. "An Experimental Study on a Home-Use Digital VTR," IEEE Transaction on Consumer Electronics, Vol. 35, No. 3, August 1989, pp. 450-457, M. YONEDA et al. "An Experimental Digital VCR with New DCT-Based Bit Rate Reduction System," IEEE Transaction on Consumer Electronics, Vol. 37, No. 3, August 1991, pp. 275-282.

In digital VTR, video data is divided into units of specified size, and SYNC and ID are added to each of the units to form a sync block. The sync blocks are recorded on a track on a recording medium. Information for distinguishing the content of the recorded data and information multiplexed in the vertical blanking period are recorded in a different area from the video data recording area on the track as AUX data. Herein, the AUX data is processed in a PACK unit. PACK is used in sub-code processing of the digital audio tape recorder (DAT), and is described in The DAT Conference Standard Digital Audio Taperecorder System, June 1987, pp. 70-81. At the beginning of the PACK, the header indicating the content of the data inserted in the PACK is added, and the content of the data can be distinguished by detecting the header.

In digital recording, the processed data is recorded as a data sequence of 0 and 1, but if 0 and 1 are detected by mistake due to distortion of the reproduced waveform, it results in a data error. In this case, if the error rate is less than a specified value, error of reproduced data can be completely corrected by the error correction technology, and therefore by adequately setting the correction capability to the error rate of reproduced data, completely correct data can be reproduced. However, if dropout occurs due to tape flaw or the like, an uncorrectable error remains.

If an uncorrectable error remains in the sync block of video data, the error is concealed so that the effect of the error may not be shown in the monitor. If an uncorrectable error remains in the sync block of the AUX data, processing is made by using only AUX data of the PACK not including the error without using AUX data of the error PACK. It is therefore necessary to send the data and the error flag corresponding thereto to both the video data processing circuit and the AUX data processing circuit from the error correction decoder circuit.

Besides, when bit rate reduction is effected on the video signal, distortion increases as coding and decoding are repeated. If, moreover, using filter processing of decimating, interpolation, etc., by repeating filter processing, similarly, distortion increases. Hence, in order that deterioration by dubbing may not be accumulated, a method of dubbing in bit rate reduction state is disclosed, for example, in U.S. Patent No. 5,193,010.

However, what is disclosed in the U.S. Patent No. 5,193,010 is to issue always the concealed data for dubbing from the reproducing apparatus side. If issued in the state including error without concealing at the reproducing apparatus side, the error flag corresponding to the data must be simultaneously issued to outside.

### SUMMARY OF THE INVENTION

It is hence an object of the invention to present a digital data processing apparatus capable of easily setting and detecting the information showing that the digital video data or auxiliary information data cannot be used in a digital signal recording and reproducing apparatus.

To achieve the object, the invention present a digital data processing apparatus to be used in a digital signal recording and reproducing apparatus for recording on a track of a recording medium a first recording block composed of digital principal information data and a second recording block composed of auxiliary information data on a track, comprising error correction means for correcting an error of data reproduced from the recording medium, first bit sequence multiplexing means for multiplexing a first bit sequence at a specified position of the first recording block containing an error not correctable by the error correction means, second bit sequence multiplexing means for multiplexing a second bit sequence including the first bit sequence at a specified position of the second recording block containing an error not correctable by the error correction means, first error processing means for processing the error of the digital principal information data in the first recording block on the basis of the first bit sequence, and second error processing means for processing the error of the auxiliary information data in the second recording block on the basis of the second bit sequence.

In this constitution of the invention, if the use of data in the recording block composed of the digital principal information data or the recording block composed of the auxiliary information data is disabled, the bit sequence indicating that the use of the data is disabled in each specified position may be recorded, so that it is possible to process without using the data by detecting such bit sequence. The invention is effectively applied when the digital principal information data is encoded digital video data.

### BRIEF DESCRIPTION OF THE DRAWINGS

Fig. 1 is a block diagram showing the constitution of a digital data reproducing apparatus in a first embodiment of the invention.

Fig. 2 is an explanatory diagram showing the constitution of sync block of video data.

Fig. 3 is an explanatory diagram showing the constitution of AUX data.

Fig. 4 is an explanatory diagram showing the configuration of sync block on track.

Fig. 5 is an explanatory diagram showing the operation when there is an error in sync block of video data in the first embodiment.

Fig. 6 is an explanatory diagram showing the operation when there is an error in sync block of AUX data in the first embodiment.

Fig. 7 is a block diagram showing the constitution of a digital data reproducing apparatus in a second embodiment of the invention.

Fig. 8 is an explanatory diagram showing the operation when there is an error in sync block of video data in the second embodiment.

Fig. 9 is an explanatory diagram showing the operation when there is an error in sync block of AUX data in the second embodiment.

Fig. 10 is a block diagram showing the constitution for issuing the encoded video data and AUX data to outside as digital data.

### DESCRIPTION OF THE PREFERRED EMBODIMENTS

Some preferred embodiments of the invention are described in detail below while referring to the accompanying drawings. In the description of the embodiments, a unit of data excluding SYNC, ID and error correction parity from the sync block is called UNIT.

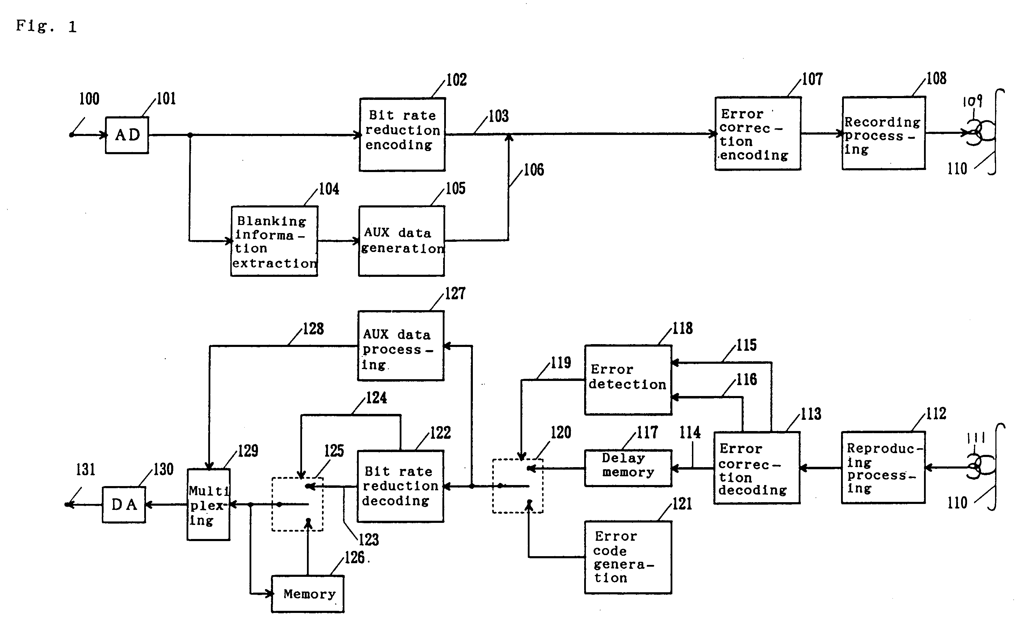

Fig. 1 is a block diagram showing a constitution of a digital data processing apparatus according to the invention. In Fig. 1, numeral 100 denotes an input terminal of video signal, 101 is an A/D converter for converting an analog signal into a digital signal, 102 is a bit rate reduction encoder, 104 is encoded video data, 104 is a blanking information extracting circuit for extracting character information and others multiplexed in the vertical blanking period, 105 is an AUX data generator for generating AUX data, 106 is AUX data, 107 is an error correction encoder, 108 is a recording processing circuit for modulating each sync block added with ID and SYNC, 109 is a recording head, and 110 is a magnetic tape. Next, numeral 111 is a reproducing head, 112 is a reproduction processing circuit for detecting reproduced signal, detecting SYNC and demodulating each sync block, 113 is an error correction decoder for correcting an error of the reproduced signal on the basis of the parity for error correction added at the time of recording, 114 is video data and AUX data processed by error correction, 115 is an error flag for showing the presence of an error in the UNIT, 116 is an ID flag for identifying the content of the unit, 117 is a delay memory for a UNIT, 118 is an error detection circuit for generating a control signal on the basis of the error flag 115 and ID flag 116, 119 is a control signal issued from the error detection circuit 118, 120 is a switch for inserting an error code, 121 is an error code generating circuit, 122 is a bit rate reduction decoder for decoding the encoded video data into the original data, 123 is decoded video data, 124 is an error flag corresponding to the decoded data, 125 is a switch, 126 is a memory, 127 is an AUX data processing circuit, 128 is information to be multiplexed in the vertical blanking period, 129 is a multiplex circuit for multiplexing the blanking information 128, 130 is a D/A converter for converting digital video data into an analog signal, and 131 is an output terminal of reproduced video signal. The operation is described below.

The video signal entered from the terminal 100 is converted into a digital signal in the A/D converter 101, and is compressed to a specified data quantity in the bit rate reduction encoder 102. In the blanking period information extraction circuit 104, the character information and other information multiplexed in the vertical blanking period are taken out. The AUX data generating circuit 105 generates the AUX data 106 corresponding to the video signal from the information taken out in the blanking information extraction circuit 104. The encoded video data 103 and AUX data 106 are combined with the parity for error correction in the error correction encoder 107. Finally, in the recording processing circuit 108, by adding SYNC and ID, a sync block is composed, and after demodulating the sync block for recording, data is recorded on the magnetic tape 110 by the recording head 109.

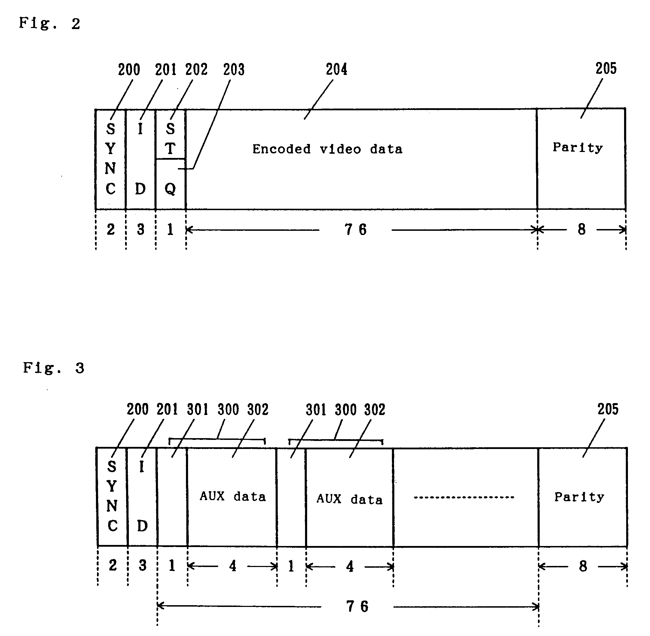

Fig. 2 is a diagram showing a constitution of the sync block of video data, in which numeral 200 is a sync signal (SYNC) for detecting a sync block from the reproduced signal, 201 is identification (ID) information consisting of a track number and a sync block number for identifying a reproduced sync block, 202 is STATUS information, 203 is quantization (Q) information, 204 is encoded video data, and 205 is a parity for error correction. A sync block is composed of a total of 90 bytes comprising SYNC = 2 bytes, ID = 3 bytes, STATUS + Q = 1 byte, data = 76 bytes, and parity = 8 bytes. The STATUS 202 is information showing the status of the corresponding UNIT, and it is expressed in 4 bits. If there is no error in the data in the UNIT, the STATUS information is set at 0000. On the other hand, if there are some errors in the data in the UNIT, the STATUS information is set at 1111. The Q information 203 is the information relating to quantization necessary for decoding the encoded video data 204. The Q information 203 is expressed in 4 bits, and one of 16 methods of quantization is set.

Fig. 3 shows a constitution of the sync block of AUX data, in which numeral 300 is a PACK, 301 is a header of the PACK, and 302 is AUX data. The AUX data is processed on a PACK by PACK basis, each PACK consisting of 5 bytes, and 15 PACKs are present in each sync block. In the first 8 bits (one byte) of each PACK, a header for identifying the content of the PACK is inserted, and data is inserted in the remaining 4 bytes. The other constituent elements are the same as in the case of encoded video data.

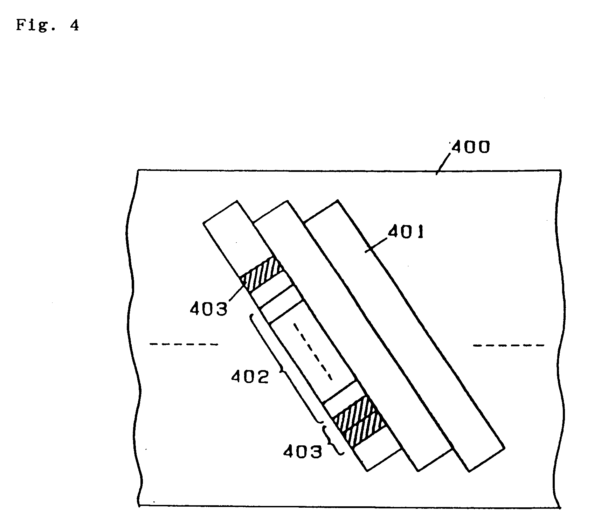

A sync block composed as shown in Fig. 2 and Fig. 3 is disposed on the track on the tape as shown in Fig. 4. In Fig. 4, numeral 400 denotes a magnetic tape, 401 is a track, 402 is a sync block of video data, and 403 is a sync block of AUX data. On one track, in Fig. 4, the sync block 403 of AUX data is disposed and recorded at both sides of the sync block 402 of video data. Since ID is attached to each sync block, by identifying the sync block number in the ID, the data of the reproduced sync block is judged to be whether video data or AUX data.

In such case of reproducing the data recorded on the tape in such constitution of sync block, the reproducing process is described below.

First, the signal reproduced from the magnetic tape 110 through the reproducing head 111 is detected and demodulated in the reproducing circuit 112. The SYNC is removed when the sync block is detected. In the error correction decoder 113, the error is corrected according to the parity for error correction added at the time of recording. The ID is removed at the moment of input into the error correction decoder 113. Errors can be corrected up to a certain number, but if dropout occurs due to flaw on the tape, the error rate may exceed the correction capability, and some errors remain. Therefore, the error correction decoder 113 issues data 114 in a UNIT after error correction process, error flag 115 showing the presence of error in the UNIT, and ID flag 116 for distinguishing the data of the UNIT. If there is no error in the UNIT, herein, the error flag 115 is set to 0, and if there are some errors in the UNIT, the error flag 115 is set to 1. The ID flag 116 is set to 0 for the UNIT of video data, and to 1 for the UNIT of AUX data. The data 114 issued from the error correction decoder 113 is written into a delay memory 117. While data for one UNIT is being stored in the delay memory 117, the error flag 115 and ID flag 116 corresponding to the UNIT written in the delay memory 117 are detected in an error detection circuit 118. When the data is read out from the delay memory 117, a corresponding control signal 119 is issued from the error detection circuit 118 at the same time. The control signal 119 is a control signal for controlling the operation of a switch 120, and when the control signal 119 is 0, the switch 120 selects the data issued from the delay memory 117, and when the control signal 119 is 1, the switch 120 selects an error code "11111111" issued from an error code generating circuit 121.

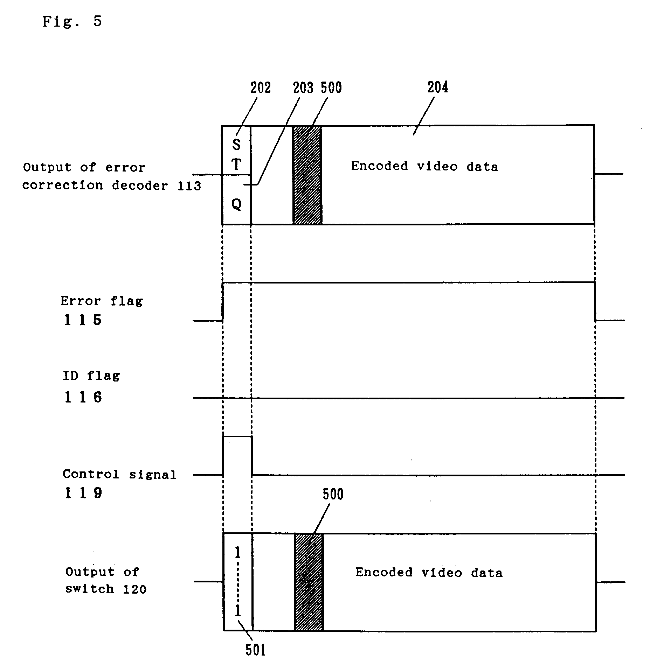

Fig. 5 is a diagram showing the operation in which some uncorrectable errors exist in a UNIT of encoded video data, and numeral 500 is error data. The control signal 119 issued from the error detection circuit 118 is 1 for the beginning one byte consisting of STATUS information and Q information, and 0 for the others. Therefore, the error code "11111111" is inserted in the beginning one byte of the UNIT. At this time, the STATUS information is set to "1111" and the presence of error in the encoded video data in the UNIT is recognized.

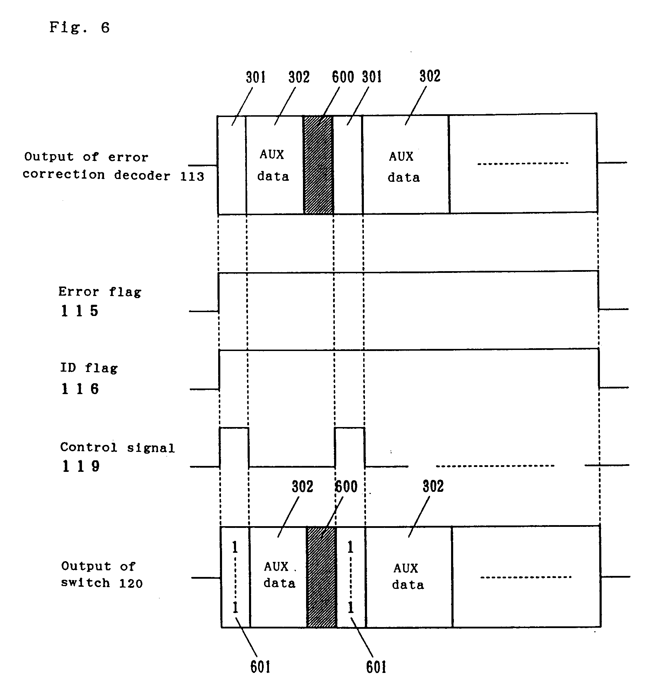

Fig. 6 is a diagram showing the operation in the case of presence of some uncorrectable errors in a UNIT of AUX data, and numeral 600 is error data. The control signal 119 issued from the error detection circuit 118 is 1 for the beginning header position of 15 PACKs, and 0 for the others. Therefore, the error code "11111111" is inserted in the header of the 15 PACKs.

The UNIT of encoded video data in which error code is inserted is put into a bit rate reduction decoder 122. In the bit rate reduction decoder 122, decoding is performed in accordance with the STATUS information and Q information, and decoded video data 123 and error flag 124 showing the presence of error are issued. Herein, the error flag 124 is set to 1 when data of the UNIT containing an error is decoded, and to 0 when data of the UNIT not containing an error is decoded. A switch 125 is a switch for replacing the error data by data at corresponding position in the past. When the error flag 124 is 0, video data issued from the bit rate reduction decoder 122 is selected, and when the error flag 124 is 1, the output data of a memory 126 is selected instead of the error video data. Therefore, correctly reproduced video data and replaced video data are issued from the switch 125. In the memory 126, moreover, always correct video data is written, and is saved for subsequent replacement processing, i.e. concealment processing.

The UNIT of AUX data in which the error code is inserted is fed into an AUX data processing circuit 127. Since the AUX data is processed on a PACK by PACK basis, data of each UNIT is divided on a PACK by PACK basis. Next, the header of each PACK is detected, and by using only the data of the PACK in which the error code is not inserted in the header, blanking information 128 is set and issued. The video data and blanking information 128 thus obtained by reproduction processing is multiplexed in a multiplex circuit 129, and converted into analog signal in a D/A converter 130, and is issued from a terminal 131.

According to the first embodiment, as described herein, if there is an error in the UNIT, a common error code is inserted at the beginning of PACK of the video data and AUX data, so that the error can be processed subsequently by detecting an error code. By preliminarily inserting "11111111" into the header for the PACK not used in recording, it is recognized that there is no information in such PACK at the time of reproduction.

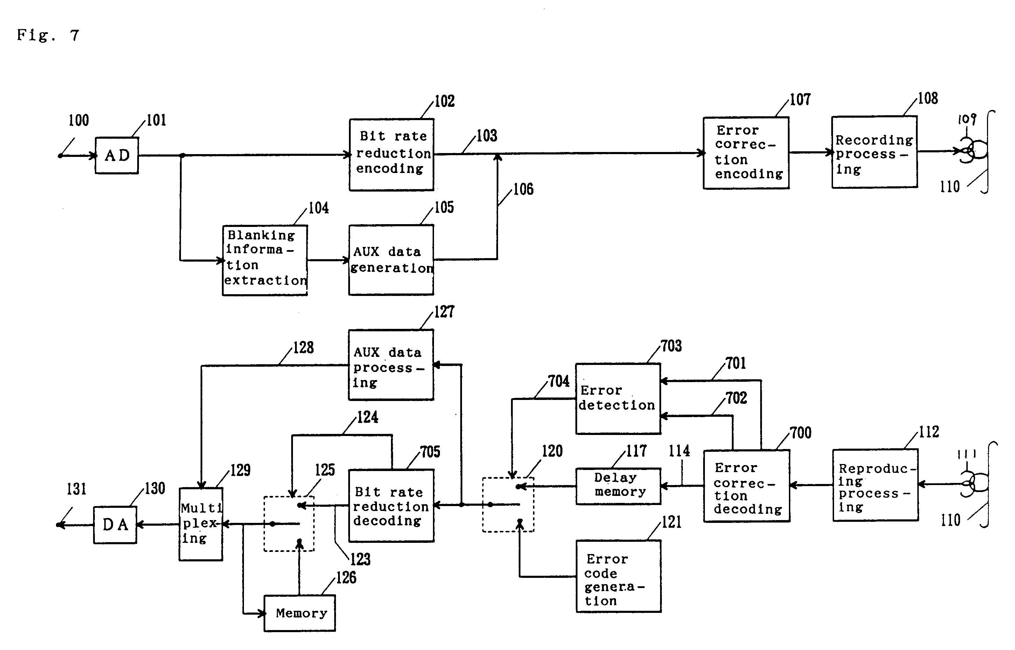

Fig. 7 is a block diagram showing a constitution of a digital data reproducing apparatus in the second embodiment of the invention. In Fig. 7, numeral 700 is an error correction decoder, 701 is an error flag showing the presence of error on a byte by byte basis, 702 is an ID flag, 703 is an error detection circuit for issuing a control signal of the switch 120 on the basis of the error flag 701 and ID flag 702, 704 is a control signal issued from the error detection circuit 703, and 705 is a bit rate reduction decoder.

In the first embodiment, the error correction decoder 113 issues the error flag 115 on a UNIT by UNIT basis, whereas in the second embodiment, the error correction decoder 700 issues the error flag 701 on a byte by byte basis. The data in the UNIT issued from the error correction decoder 700 is written into the delay memory 117. The error detection circuit 703 detects the error flag 701 and ID flag 702 corresponding to the UNIT written in the delay memory 117, and generates the control signal 704.

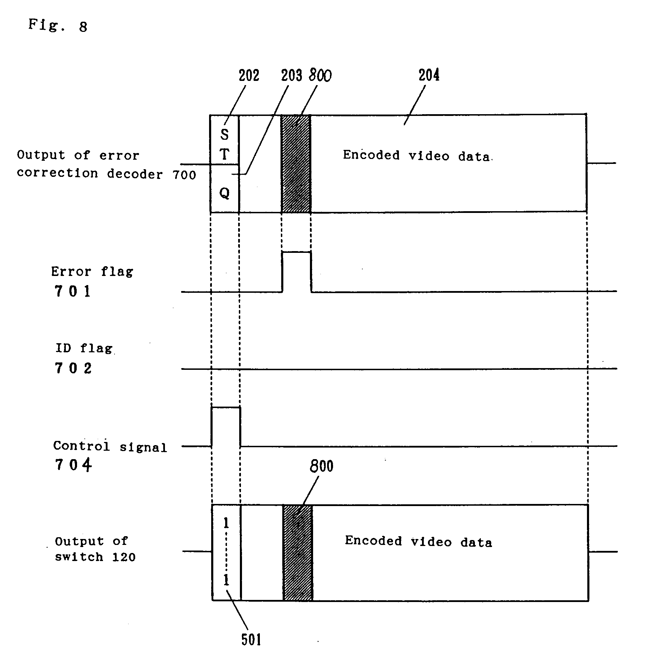

Fig. 8 is a diagram showing the operation in the case of presence of some uncorrectable errors in the UNIT of encoded video data, and numeral 800 is error data. In Fig. 8, the error flag 701 is a flag on a byte by byte basis, but if there are some errors in the UNIT of video data, the STATUS information is set at "1111." Therefore, the control signal 704 issued from the error detection circuit 703 is set to 1 for the beginning one byte comprising the STATUS information and Q information, and 0 for the others. In the switch 120, an error code is inserted into the beginning one byte of the UNIT.

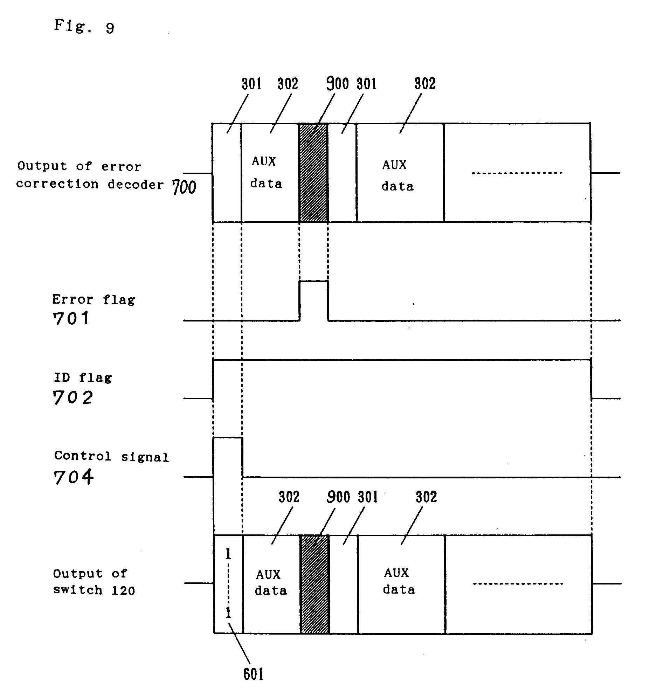

Fig. 9 is a diagram showing the operation in the case of presence of some uncorrectable errors in the UNIT of AUX data, and numeral 900 is error data. By the error flag 701, it is judged that an error is present in a PACK, and hence the error detection circuit 702 issues 1 for the header of the PACK containing error data, and 0 for the others. Therefore, in the switch 120, an error code is inserted into the header position of the PACK containing error data.

According to the second embodiment, as described herein, if there are some errors in the UNIT, the error flag on a byte by byte basis is used, and an error code is inserted only into the header of the PACK containing an error, while error code is not inserted in the PACK not containing an error, so that the data of correct PACK can be used more.

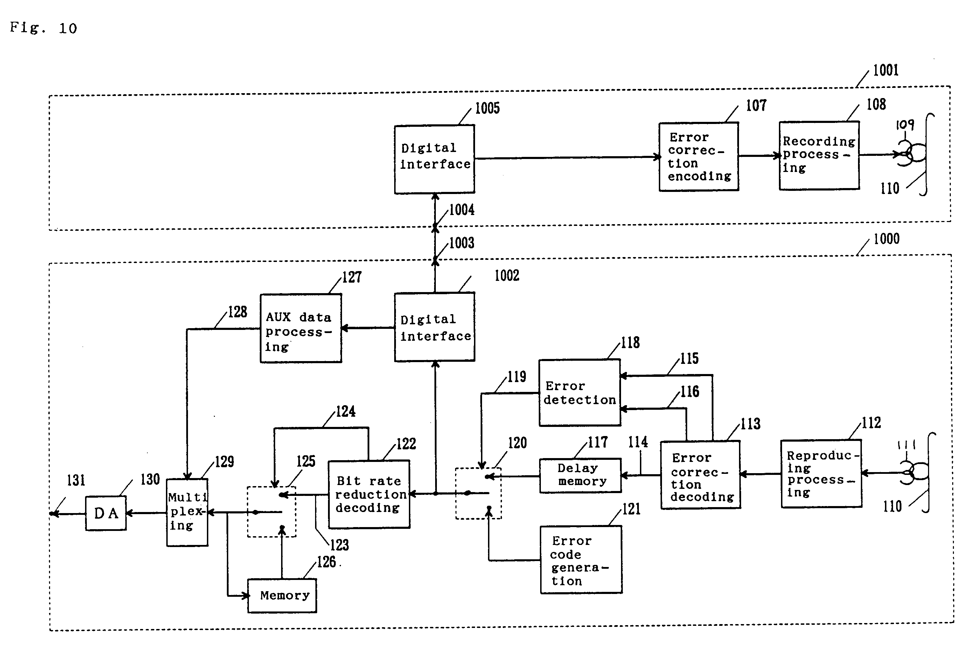

In the foregoing embodiments, the operation within one apparatus is described, but Fig. 10 shows a block diagram in which encoded video data and AUX data are issued outside as digital data.

In Fig. 10, numeral 1000 is a reproducing side apparatus, 1001 is a recording side apparatus, and 1002 and 1005 are digital interface circuits. Numeral 1003 is an output terminal of digital data, and 1004 is an input terminal of digital data.

First, in the reproducing side apparatus 1000, the encoded video data and AUX data are fed into the digital interface circuit 1002, and converted into a format suitable for transmission, and issued outside from an output terminal 1003. At this time, the error code is multiplexed on the digital data issued from the output terminal 1003.

Next, the digital data 1003 is fed into the recording side apparatus from an input terminal 1004, and the encoded video data in each original UNIT from the transmission format and AUX data are taken out in a digital interface circuit 1005. Such data are combined with a parity for error correction in the error correction encoder 107, and modulated for recording in the recording processing circuit 108, and recorded on a magnetic tape 110 by the recording head 109. That is, if there are some errors, the error correction is performed in the state in which an error code is multiplexed, and the data is recorded on the magnetic tape. Therefore, when the tape is reproduced next time, the error code multiplexed on the reproduced UNIT may be detected, so that error can be processed respectively in the encoded video data and AUX data.

In the embodiment, the encoded video data and AUX data are explained, but the invention may be similarly applied also to other digital data than video data.

## Claims

1. A digital data processing apparatus to be used in a digital signal recording and reproducing apparatus for recording on a track of a recording medium a first recording block composed of digital principal information data and a second recording block composed of auxiliary information data, comprising:
error correction means for correcting an error of data reproduced from the recording medium;
first bit sequence multiplexing means for multiplexing a first bit sequence at a specified position of the first recording block containing an error not correctable by the error correction means;
second bit sequence multiplexing means for multiplexing a second bit sequence including the first bit sequence at a specified position of the second recording block containing an error not correctable by the error correction means;
first error processing means for processing the error of the digital principal information data in the first recording block on the basis of the first bit sequence; and
second error processing means for processing the error of the auxiliary information data in the second recording block on the basis of the second bit sequence.

2. A digital data processing apparatus of claim 1, wherein the digital principal information data in the first recording block is encoded video data.

3. A digital data processing apparatus of claim 1, wherein the first bit sequence multiplexing means inserts the first bit sequence into the beginning of the first recording block.

4. A digital data processing apparatus of claim 1, wherein the second bit sequence multiplexing means divides the second recording block into specific units, and inserts the second bit sequence into the beginning of each of the units.

5. A digital data processing apparatus of claim 1, wherein an error is detected, if there is an error in the first recording block, by inserting the second bit sequence at specified position of the first recording block, and detecting the second bit sequence in both the first and second recording blocks.
